Europäisches Patentamt

European Patent Office

Office européen des brevets

(19)

(11) **EP 1 008 012 B1**

(12) **EUROPEAN PATENT SPECIFICATION**

(45) Date of publication and mention
of the grant of the patent:
**08.12.2004 Bulletin 2004/50**

(51) Int Cl.[7]: **G02F 1/1335**

(86) International application number:
**PCT/US1998/001486**

(21) Application number: **98902720.6**

(22) Date of filing: **21.01.1998**

(87) International publication number:
**WO 1998/033091 (30.07.1998 Gazette 1998/30)**

(54) **LENS ARRAY ON LCD PANEL AND METHOD**

LINSENANORDNUNG AUF FLÜSSIGKRISTALLBILDSCHIRM UND VERFAHREN

MOSAIQUE DE LENTILLES SUR PANNEAU D'AFFICHAGE A CRISTAUX LIQUIDES ET PROCEDE
CORRESPONDANT

(84) Designated Contracting States:
**DE FR GB NL**

(30) Priority: **29.01.1997 US 3649 P**

(43) Date of publication of application:
**14.06.2000 Bulletin 2000/24**

(73) Proprietor: **CORNING INCORPORATED
Corning, N.Y. 14831 (US)**

(72) Inventors:
• **BORRELLI, Nicholas, F.
Elmira, NY 14905 (US)**
• **MOORE, Chad, B.
Corning, NY 14830 (US)**

(74) Representative: **Boon, Graham Anthony
Elkington and Fife LLP,
Prospect House,
8 Pembroke Road
Sevenoaks, Kent TN13 1XR (GB)**

(56) References cited:
EP-A- 0 425 251        EP-A- 0 615 150
US-A- 5 436 764        US-A- 5 482 800

• OPPLIGER Y ET AL: "ONE-STEP 3D SHAPPING
USING A GRAYTONE MASK FOR OPTICAL AND
MICROELECTRONIC APPLICATIONS"
MICROELECTRONIC
ENGINEERING, NL, ELSEVIER PUBLISHERS BV.,
AMSTERDAM, vol. 23, 1 January 1994
(1994-01-01), pages 449-454, XP000615045 ISSN:
0167-9317
• GALE M T ET AL: "FABRICATION OF
CONTINUOUS-RELIEF MICRO-OPTICAL
ELEMENTS BY DIRECT LASER WRITING IN
PHOTORESISTS" OPTICAL
ENGINEERING, US, SOC. OF PHOTO-OPTICAL
INSTRUMENTATION ENGINEERS.
BELLINGHAM, vol. 33, no. 11, 1 November 1994
(1994-11-01), pages 3556-3566, XP000475099
ISSN: 0091-3286
• PATENT ABSTRACTS OF JAPAN vol. 014, no.
581 (P-1147), 26 December 1990 (1990-12-26) &
JP 02 251820 A (NIPPON SHEET GLASS CO
LTD), 9 October 1990 (1990-10-09)

EP 1 008 012 B1

**Description**

FIELD OF THE INVENTION

A diffractive element lens array on a LCD panel and a method of production.

BACKGROUND

An important aspect of the performance of LCD systems is brightness. This is a particularly serious problem in TV systems employing an LCD projection element. Light is lost at every stage of transmission. This includes the polarized light source, the color filters and the aperturing due to electrical circuitry on the LCD panel.

The desirability of focusing light to better utilize the available apertures has been recognized. It has been proposed to employ a microlens array with each lens corresponding to a pixel in the LCD

An early method for forming such an array involved generating a spherical surface on one end of a plurality of glass rods. The rods were then combined by bundling and fusion sealing. While effective technically, this procedure, obviously, was a cumbersome, time-consuming procedure.

Another method involves developing a gradient refractive index in a glass. It has been proposed to accomplish this by an ion exchange process. Another proposed procedure involves impregnating a porous, glass body with a photolyzable material, and then exposing the impregnated body with photolyzing light.

A more versatile procedure is disclosed in United States Patent No. 4,572,611 (Bellman et al.). That patent describes an optical element comprising an array of isolated, spherical microlenses. Each microlens is integral with, and forms a raised spherical surface on, a glass substrate, in particular, an opacifiable, photosensitive glass. To provide a plano surface on one side of the optical element, the microlens array will be removed from that side.

Both the gradient index and the photosensitive glass approaches require special glass compositions and special processing steps. Also, the lens array glass and the glass of the LCD panel will generally.have different properties, in particular, different coefficients of thermal expansion (CTEs). This can result in failure to maintain registration between the lenses and the pixels over the entire area of a panel. The registration problems can arise initially, and also with any subsequent change in the ambient temperature.

It is, therefore, highly desirable to produce the lens array on an arbitrary substrate. This decouples the method of making the lens from the required thermal and physical properties of the substrate. It can be accomplished by making diffractive microlenses. Theoretically, the diffractive lens can produce a wavefront that is identical to a conventional refractive lens.

An approximation to the required structure can be achieved through a technique known as binary optics. In this case, a multi-step approach is used to approximate the required surface configuration. This is shown in EP-A-615 150, which discloses an integral cover glass for an LCD panel. The cover glass has an array of microlenses made by the binary optics approach and integral with the outside of its front face. The microlens array is an array of diffractive gratings produced in a glass surface by a practice involving a combination of photolithography and glass etching.

The diffractive microlens made by the binary optic method, satisfies the above criterion of being substrate independent. However, it requires a number of separate exposure steps, and glass etching steps, to achieve a sufficient level of stepwise approximation to permit diffraction efficiencies of over 90%. Thus, a theoretical efficiency of about 95% requires producing eight levels in a diffractive grating, together with the necessary multiple photomask exposures. It would obviously be desirable to provide a simpler procedure. It would also be desirable to employ a lens array having a true Fresnel pattern, that would improve on the performance of the diffractive microlens made by the binary optic method.

The design of, and manner of producing, a microlens array by the binary optics approach, as in EP-A-615 150 presents a further, significant deficiency. It does not permit fully utilizing the available space for a lens, that is, it does not provide what is known as a high-fill factor. This is explained in more detail, infra. It would, therefore, be desirable to provide a microlens array having a design, as in claim 1, whereby the lens array has a high-fill factor such that the theoretical efficiency can be 100%.

A triad lens array design, such that each lens is designed to provide a different color, while maintaining a common focal length, would also be desirable. This would enable correction for chromatic aberrations.

Finally, it would be desirable to fabricate the lens array on a material having the same properties as the LCD panel glass, preferably on the panel glass itself Also, it would be desirable to conduct the fabrication process at essentially ambient temperature so that no thermally induced mechanical distortion will occur. Such distortion ultimately could lead to misregistration with the LCD panel.

It is a basic purpose of the present invention to provide a projection LCD, as recited in claim 1. A further purpose is to provide a microlens array that can be fabricated in a manner meeting the needs described above. Another purpose is to provide a microlens array that utilizes a diffractive grating structure to effect the lens function. A still further purpose is to provide unique methods of fabricating a microlens array with high diffraction efficiency. A particular purpose is to provide a unique microfresnel lens array and a method of production.

## SUMMARY OF THE INVENTION

The article of the invention is a projection LCD comprising a glass panel and a transparent microfresnel lens array, the microfresnel lens array comprising a photoresist or a colloidal inorganic oxide on the glass panel, or a structural pattern of a Fresnel lens composed of the panel glass and formed within the panel surface, in which each microfresnel lens element in the array is aligned with a pixel in the LCD, characterised in that partial lens elements extend into the four comers which surround the array, so as to provide a fill factor greater than about 90%.

## PRIOR ART

In addition to art referred to elsewhere herein, attention is directed to the following: OPPLIGER Y ET AL: 'ONE-STEP 3D SHAPPING USING A GRAYTONE MASK FOR OPTICAL AND MICROELECTRONIC APPLICATIONS' MICROELECTRONIC ENGINEERING, NL, ELSEVIER PUBLISHERS BV., AMSTERDAM, vol. 23, 1 January 1994 (1994-01-01), pages 449-454, XP000615045 ISSN: 0167-9317; and
   PATENT ABSTRACTS OF JAPAN vol. 014, no. 581 (P-1147), 26 December 1990 (1990-12-26) & JP 02 251820 A (NIPPON SHEET GLASS CO LTD), 9 October 1990 (1990-10-09).

## BRIEF DESCRIPTION OF THE DRAWINGS

   Figure 1 is a schematic view of a typical Fresnel lens pattern.
   Figure 2 is a schematic showing of an optical system for focusing light in an LCD with a microfresnel lens array.
   Figure 3 is a schematic representation of an alternative optical system for focusing light in an LCD with a microfresnel lens array.
   Figure 4 is an optical micrograph showing a photomask used in practicing the present invention.
   Figure 5 is a surface trace showing a record of an Atomic Force Microscopy measurement.
   Figure 6 is a photo taken by optical microscopy showing a microfresnel lens array in accordance with the invention.

## BRIEF DESCRIPTION OF THE INVENTION

The present invention arose from a search for an efficient way to improve the light transmittance in a projection LCD TV. It incorporates a high-fill factor microfresnel lens array in an optical system to focus light through the clear region of an LCD pixel. The lens array can be considered as a separate element in operative relation to, or formed in, the outer, or front, face of an LCD panel glass. The thickness of the panel glass corresponds to the focal length of the lenses.

As indicated earlier, known means of providing a lens array have entailed using special glasses. These glasses have different physical properties, particularly thermal expansion coefficient, thereby leading to problems in ultimately maintaining registration with the panel glass. The present invention obviates these problems by forming a diffractive element lens array on, or in direct contact with, the panel glass.

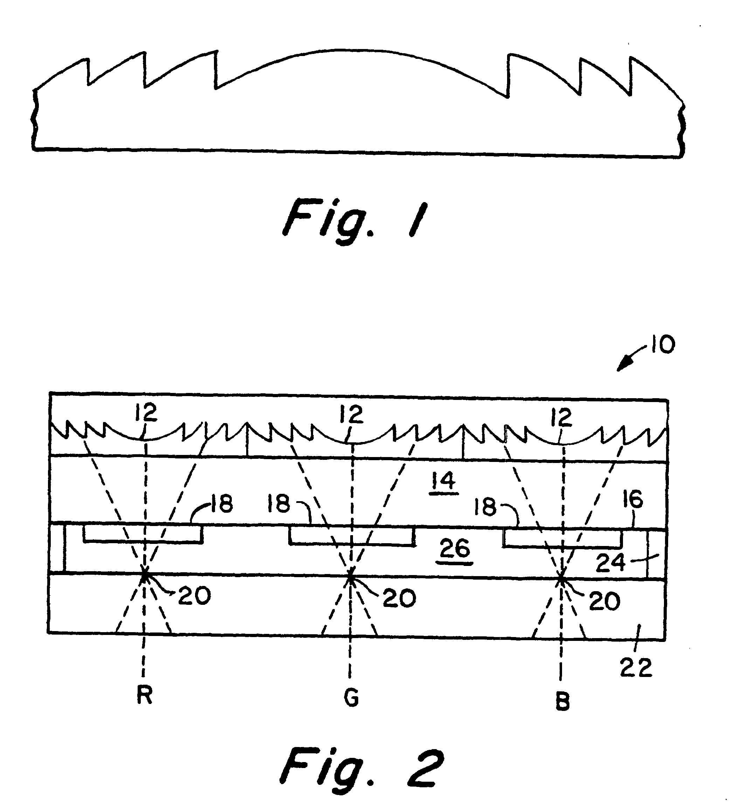

In designing the physical structure of an individual, diffractive lens element, two approaches are available in theory. One is a microfresnel lens array; the other, a binary approximation as described in EP-A-615 150. The binary optic approach, although straightforward, has a theoretical diffraction efficiency dependent on the structural levels, as explained earlier. FIGURE 1 shows a typical Fresnel lens pattern that would be reproduced on a micro scale in a microfresnel lens array.

The microfresnel lens structure provides a theoretical diffraction efficiency of 100% which is highly desirable. The difficulty with that approach is the need for a means of producing the requisite surface curvature pattern. An invention, as in claim 3, solves this problem by producing a microfresnel lens from a transparent photoresist. The photoresist is characterized by a shallow, linear response curve. To take advantage of this feature, the photoresist is exposed through a variable transmittance mask. The mask has a variable transmittance function, $T(r)$. It produces, by exposure variation, an exposure pattern in the resist that is proportional to $T(x)$. The mask is produced via an e-beam, half-tone method. The combination of the photoresist having a shallow, linear response curve with exposure through a variable transmittance mask enables generating the desired surface curvature of the microfresnel lens in the photoresist.

For a refractive lens, the expression for the required phase function, in terms of the lens thickness h as a function of the radial distance, is given by parabolic form.

$$(1) \qquad h(r) = (\tfrac{1}{2}R_c)\,(r_0{}^2 - r^2)$$

where, $r_0$ is the radius of the lens and $R_c$ is the radius of curvature. The transmittance function of the corresponding diffractive element will have the same phase function. For a plane wave traveling in the z direction, the transmittance function has the following form.

$$(2) \qquad T(x) = \exp\{-2\pi i\phi(x)\}$$

For a diffractive element, the phase function $\phi(r)_d$ derives from the same form as the refractive element, and can be expressed in the form,

$$(3) \qquad \phi_d(r) = 2\pi r^2/2\lambda R_c$$

wherein $R_c$ is the focal length,
or expressing it in terms of integral waves, $\phi/2\pi$, one has,

$$(4) \qquad \phi(r) = -r^2/2\lambda R_c$$

where the phase is measured from the center of the lens, at $r = 0$.

The microfresnel lens approach uses equation 3 to determine the grating spacing radii, $r_i$, by setting $\Phi(r) = 1, 2, ...., n$, out to the lens radius, $r_0$. A nominal radius of curvature is desired that corresponds to a focal length equal to the cover glass thickness divided by its refractive index. For a 1.1 mm. thick glass, the focal length is 0.72 in air. In order to provide overall achromatic performance, the RGB lenses form a repeating triad, each lens of the triad being positioned in accordance with its wavelength so that the focal length of the three colors are the same. For example, for the three wavelengths 460 nm, 540 nm and 620 nm, the radial positions of the first ring are, in the same order, 0.57 mm., 0.63 mm. and 0.67 mm. The required shape of the curve between each segment, $r_i$ to $r_{i+1}$, is given by equation (1).

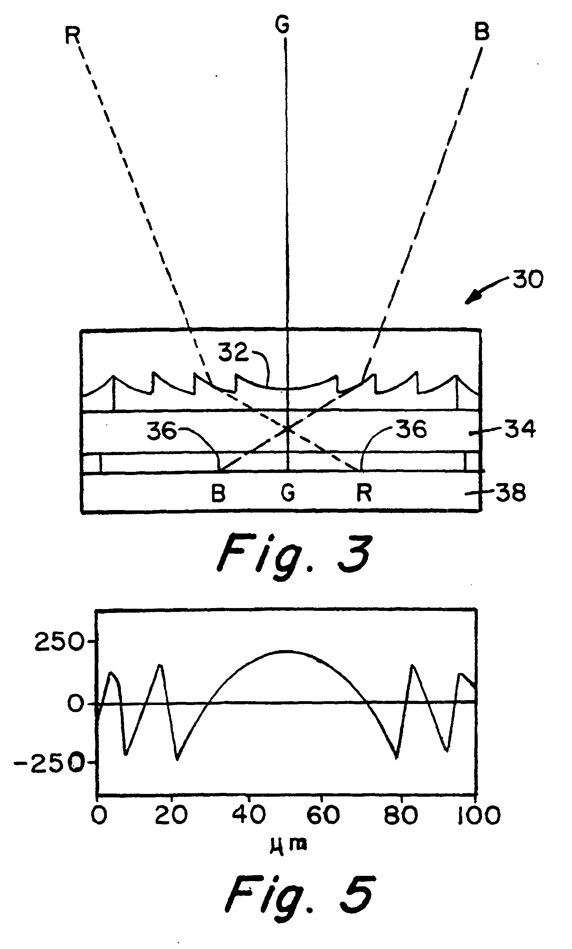

FIGURE 2 in the accompanying drawings is a schematic representation of an optical system; generally designated 10. Optical system 10 illustrates the function of the present microfresnel lens in enhancement of light transmission through a projection LCD.

System 10 includes a triad of microfresnel lenses 12 and a front panel glass 14 having an inner face 16. Color filters 18, to provide red, green and blue light, are applied on face 16. Light focused by lenses 12 passes through filters 18 and is focused on apertures 20 on back panel 22. Panels 14 and 22 are joined by a seal 24 to form an enclosure 26 for the LCD fluid.

FIGURE 3 is a schematic representation of an alternative system 30 where light, split into red, green and blue light beams designated R, G and B, is directed through microfresnel lens 32, and focused through panel 34 on separate apertures 36 in panel 38. System 30 avoids a need for filters and lenses for each color. Light is transmitted as beams, but shown as rays to avoid confusion. The present microfresnel lens array is readily adaptable to either system.

An embodiment of the another invention is based on using an exposure through a single 5X mask to ultimately produce a lens element having the surface structure of a Fresnel lens. The 5X mask is desirable because of the 5X photoreduction in the exposure. We have found that a lens having the desired structure can be obtained by exposing, through a graded density transmittance mask, a positive photoresist that exhibits a shallow, linear response. Such a resist is available under the designation Shipley 1400-23, the resist essentially containing a novolak with hydroxy groups and a diazonaphthoquinone (DNQ). It has a shallow, linear response that can undergo a gradual, linear change in depth of exposure, rather than the usual sharp, steep change, when exposed through the variable exposure mask.

We achieve the desired lens structure by exposing a layer of positive photoresist through the graded transmittance mask. This generates a pattern of exposed resist having a surface boundary with unexposed resist that corresponds to the desired Fresnel pattern shown in FIGURE 1. We utilize an exposure mask with a variable transmittance function that provides the correct pattern of variable exposure to the resist. The desired surface configuration is obtained in undeveloped resist remaining on the substrate when the exposed resist is developed and removed. The resist lens may be hardened by appropriate post treatment such as deep UV or thermal baking.

A lens is produced through a one exposure process by preparing the photomask by e-beam writing in such a way as to provide the required gradient exposure. The desired focal length is determined by the ring spacing given by equation 3. The surface profile is produced by using a variable transmittance mask and a controlled uniform UV exposure. The transmittance function in the mask is produced by utilizing a half-tone pattern generator to form a range of small chrome dots by the standard e-beam process. The size of the dot is controlled by the exposure of which there are sixteen separate levels. The areal density of the dots as a function of the radius of the lens is calculated so that the optical transmittance function conforms to the segmented form of equation 1.

A positive resist is used which requires the lowest intensity where the lens is to be the thickest. For example, we let the radial segments, based on radii obtained from equation 4, be $r_0 < r < r_1$, $r_1 < r < r_2$, ..., $r_n < 0$. Further, we let the mask transmittance range from 0 to 1 in increments of 16, which we called $\Delta T$ within each segment. The continuous transmittance over the kth segment is defined as

$$(5) \qquad T(r) = (r^2 - r_k^2)/(r_{k-1}^2 - r_k^2) \text{ in the interval } r_{k-1} < r < r_k$$

One then divides this region into N distinct segments. The transmittance according to equation (5) in each of the N subintervals is approximated by controlling the areal density in e-beam generated dots similar to a half-tone printing technique.

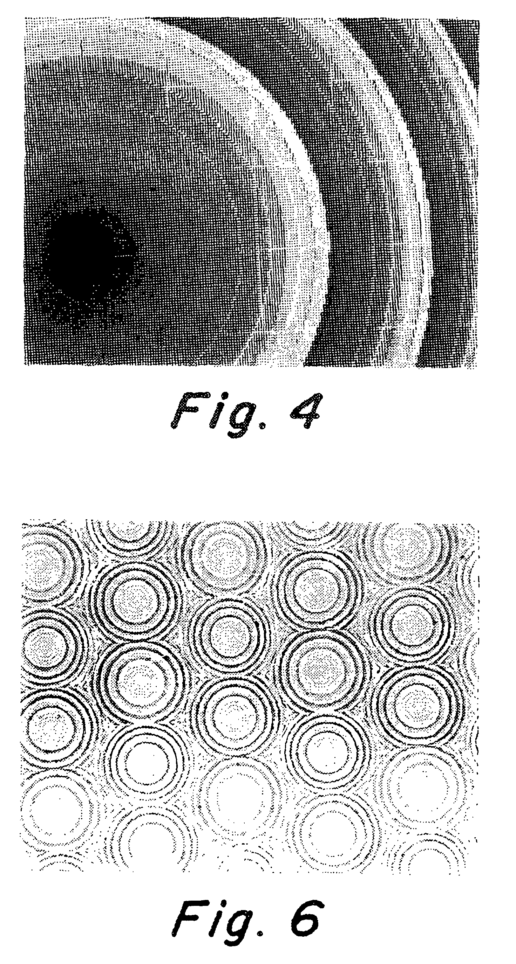

FIGURE 4 is an optical micrograph, taken at a magnification of 500 times, of a 5X mask prepared as just described. The dot density corresponds to desired transmittance intensity. The different optical densities were produced by controlling the exposure of a 5 pixel by 5 pixel element over sixteen elements. The size of the element was a function of the exposure. The resolution is such that when the exposure is made, the illumination pattern on the resist appears essentially continuous because of the 5X reduction in the exposure in the wafer plane.

The glass substrate is then coated with an approximately 1.6 micron thick layer of a special resist that exhibits a shallow, linear response curve when developed. This linear behavior is a crucial property that enables producing the continuous surface figure in the resist. The resist coated glass is then exposed through the mask and the pattern developed in the resist. The optimum exposure is experimentally determined.

FIGURE 5 is based on an Atomic Force Microscopy (AFM) measurement showing a surface trace of a microfresnel lens configuration produced using a mask as shown in FIGURE 4.

FIGURE 6 is a photo taken by optical microscopy at a magnification of 250X, It shows a microfresnel lens array produced in accordance with the present invention, i.e. the invention of claim 1. It illustrates the overall high efficiency achieved by a high fill factor, greater than 90%, a very important aspect of the invention. It will be observed that partial lens elements extend into the four comers. This enables full utilization of the available space, and is a characteristic feature of the present lens array as envisioned by the term "high-fill factor."

The overall diffraction efficiency of the lens array was determined by measuring the increase in light through an LCD panel; that is, in the actual device setting. The lens array was placed into registration with the LCD panel shown in FIGURE 2. The panel was a fully assembled three-color dot panel with an unaided aperture ratio of 40%. The amount of light transmitted by a portion of the panel containing about 100 pixels without the lens array was measured with a photometer attachment to a Nikon Optiphot™ microscope. The photometer was sensitive to the wavelength range encompassing the RGB lens. The lens array was then aligned to the panel with the lens surface against the outside face of the cover glass that had the aperture mask. The optical measurement with the photometer was repeated with the lens array in place. The ratio of this reading with the lens array divided by the reading without the lens array from the previous measurement yielded the aperture ratio increase. The resist lens array provided an 80% increase in transmitted light through the LCD.

A microfresnel lens array, thus formed from photoresist, tends to be soft. It does not slump or flow, but it is vulnerable to damage during handling or in use. A serious consideration, then, is providing a means of hardening or stiffening the photoresist to render it more robust. At the same time, the lens structure must remain essentially unchanged.

Various means of accomplishing this desired end have been devised. One method involves loading the photoresist with inorganic, colloidal particles prior to its application to a surface. The amount of material mixed in the resist may be as much as is consistent with applying a thin layer.

A variation on this technique comprises using colloidal silica as the additive. A thin layer of the mix is applied and a microfresnel lens structure developed as described above. The lens pattern is then heated in air to remove the resist, thereby leaving a lens structure of colloidal silica. This can be thermally coalesced, and further strengthened with an inorganic coating applied, for example, by CVD.

Another procedure, which we prefer, involves a deep UV cure and/or a thermal bake. The deep UV cure initially produces a polymerized surface on the resist that may extend inward if the cure is continued. This protects the resist, particularly if it is subsequently baked. The resist surface may also be hardened by treatment in a thermal oven or on a hot plate. The thermal bake causes novolak hydroxy groups to crosslink with multifunctional DNQs to enhance thermal stability.

Either treatment alone may provide adequate mechanical strength for some purposes. However, we prefer to combine the treatments. The deep UV cure preferably employs radiation in the wavelength range of 200-320 nm, and for a time up to fifteen minutes depending on the resist used. Some resists tend to become wrinkled with longer exposure times.

The optimum hard bake cycle must be determined for any selected resist. With the Shipley 1400-23 resist on a glass substrate, we have found a thirty minute bake at a temperature of 150-250° C., to be satisfactory. We have also deposited a $SiO_2$ layer, e.g., an 80 nm layer over the resist lens array. This hardened the surface, while having no adverse effect on optical performance.

For some purposes a lens pattern of photoresist can not be used. Rather, it may be necessary to have an all glass assembly. We have found that the photoresist lens pattern can be translated into a panel by uniformly etching the glass substrate bearing the resist lens until the resist is totally removed. Meantime, the pattern is transferred into the glass surface. This avoids the inherent absorption of the resist, thus enhancing the ultimate light output to about 90%.

Multicomponent glasses tend to etch non-uniformly. This may be avoided by depositing a silica layer on the glass surface prior to applying the resist and developing the microlens array therefrom. This permits the microfresnel lens array to be etched into the silica layer which tends to etch uniformly.

**Claims**

1. A projection LCD comprising a glass panel and a transparent microfresnel lens array, the microfresnel lens array comprising a photoresist or a colloidal inorganic oxide on the glass panel, or a structural pattern of a Fresnel lens composed of the panel glass and formed within the panel surface, in which each microfresnel lens element in the array is aligned with a pixel in the LCD, **characterised in that** partial lens elements extend into the four corners which surround the array, so as to provide a fill factor greater than about 90 % .

2. A projection LCD in accordance with claim 1, wherein the microfresnel lenses are arranged in triads and oriented with respect to the LCD pixels in a manner corresponding to the color wavelengths to correct for chromatic aberration.

3. A projection LCD in accordance with claim 1 or 2, wherein the array is on the panel surface and is composed of a positive photoresist having a shallow linear curve response when exposed through a variable density mask.

4. A projection LCD in accordance with claim 1 or 2, wherein the microfresnel lens array is on the panel surface and comprises a photoresist with transparent, inorganic particles.

**Patentansprüche**

1. Ein Projektions-LCD mit einer Glasscheibe und einer transparenten Mikrofresnel-Linsenanordnung, wobei die Mikrofresnel-Linsenanordnung einen Fotolack- oder ein kolloidales anorganisches Oxyd auf der Glasscheibe aufweist, oder ein strukturelles Muster aus einer Fresnel-Linse, bestehend aus einer Glasscheibe und gebildet innerhalb der Scheibenoberfläche, bei dem jedes Mikrofresnel-Linsenelement in der Anordnung mit einem Pixel in der LCD ausgerichtet ist,
**dadurch gekennzeichnet,**
**dass** partielle Linsenelemente sich in die vier Ecken erstrecken, welche die Anordnung umgeben, sodass ein Füllfaktor größer als 90 % geschaffen wird.

2. Projektions-LCD entsprechend Anspruch 1, bei dem die Mikrofresnel-Linsen in Triaden angeordnet sind und gegenüber den LCD-Pixeln in einer Weise orientiert sind, welche den Farb-Wellenlängen entsprechen, um die chromatische Aberration zu korrigieren.

3. Projektions-LCD entsprechend Anspruch 1 oder 2, wobei die Anordnung auf der Scheibenoberfläche vorgesehen ist und aus einem positiven Fotolack besteht, der ein flaches bzw. oberflächliches lineares Kurvenansprechverhalten aufweist, wenn er über eine Maske mit variabler Dichte belichtet wird.

4. Projektions-LCD entsprechend Anspruch 1 oder 2, wobei die Mikrofresnel-Linsenanordnung auf der Scheibenoberfläche angeordnet ist und einen Fotolack mit transparenten, anorganischen Partikeln aufweist.

**Revendications**

1. Un dispositif d'affichage par projection à cristaux liquides comprenant un panneau en verre et un réseau de microlentilles de Fresnel transparentes, le réseau de microlentilles de Fresnel comprenant une résine photosensible ou un oxyde minéral colloïdal sur le panneau en verre, ou un motif structural d'une lentille de Fresnel composé sur le verre du panneau et formé dans la surface du panneau, dans lequel chaque élément de microlentille de Fresnel dans le réseau est aligné avec un pixel du dispositif d'affichage à cristaux liquides, **caractérisé en ce que** des éléments de lentille partiels s'étendent dans les quatre coins qui entourent le réseau, de manière à fournir un facteur de remplissage supérieur à environ 90 %.

2. Un dispositif d'affichage par projection à cristaux liquides selon la revendication 1, dans lequel les microlentilles de Fresnel sont disposées en triades et orientées par rapport aux pixels du dispositif d'affichage à cristaux liquides d'une manière correspondant aux longueurs d'onde des couleurs pour corriger l'aberration chromatique.

3. Un dispositif d'affichage par projection à cristaux liquides selon la revendication 1 ou 2, dans lequel le réseau est sur la surface du panneau et est composé d'une résine photosensible positive ayant une courbe de réponse linéaire peu profonde lorsqu'elle est exposée à travers un masque à densité variable.

4. Un dispositif d'affichage par projection à cristaux liquides selon la revendication 1 ou 2, dans lequel le réseau de microlentilles de Fresnel est sur la surface du panneau et comprend une résine photosensible à particules minérales transparentes.

Fig. 1

Fig. 2

**Fig. 3**

**Fig. 5**

**Fig. 4**

**Fig. 6**